# EUROPÄISCHE PATENTSCHRIFT

(11) **EP 3 121 406 B1**
(45) Veröffentlichungstag und Bekanntmachung des Hinweises auf die Patenterteilung: **19.09.2018**
(21) Anmeldenummer: 16151448.4
(22) Anmeldetag: 15.01.2016
(51) Int. Cl.: F01N 13/08, F16L 37/08, F01N 13/18

(54) **AUSPUFFROHR-MONTAGEANORDNUNG**
EXHAUST PIPE MOUNTING ASSEMBLY
SYSTEME DE POSE DE TUYAU D'ECHAPPEMENT

(30) Priorität: 23.07.2015 DE 202015103869 U
(43) Veröffentlichungstag der Anmeldung: 25.01.2017
(73) Patentinhaber: Cisma Solutions ApS, 8600 Silkeborg (DK)
(72) Erfinder: Laursen, Søren Kroun, 6040 Egtved (DK)
(74) Vertreter: Kohler Schmid Möbus Patentanwälte

(56) Entgegenhaltungen:
- CN-U- 202 402 119
- CN-U- 203 756 298
- DE-T5-112015 000 497

## Beschreibung

### Gebiet der Erfindung

Die vorliegende Erfindung bezieht sich auf eine Auspuffrohr-Montageanordnung zum Montieren eines Auspuffrohrs an einem Auslassrohr an Kraftfahrzeugen wie z.B. Personenwagen, Lastwagen usw.

### Hintergrund der Erfindung

Auspuffrohre, d. h. das äußerste Ende eines Auslassrohrs, werden auch Blenden genannt. Auspuffrohre werden häufig an Auslassrohren von Kraftfahrzeugen wiez. B. Lastwagen oder Personenwagen montiert, um ein bestimmtes Design am hinteren Ende des Kraftfahrzeugs, insbesondere von Personenwagen, zu schaffen.

Wenn Auspuffrohre an einem Auslassrohr von Kraftfahrzeugen montiert werden, ist es bekannt, Schraubverbindungen zur Befestigung des Auspuffrohrs am Ende des Auslassrohrs zu verwenden, z. B. durch Vorsehen einer Anzahl von Schrauben, typischerweise mindestens drei, gewöhnlich vier, die gleichmäßig um den Umfang des Verbindungsendes des Auspuffrohrs verteilt sind.

Wenn die Schrauben festgezogen werden, müssen die Schrauben gleichmäßig festgezogen werden oder es besteht ein Risiko, dass das Auspuffrohr nicht korrekt auf das Auslassrohr ausgerichtet wird. Außerdem besteht ein Risiko für das Überanziehen von einer oder mehreren der Schrauben, was zur Verformung des Auspuffrohrs und/oder des Auslassrohrs führen kann.

Vorher bekannte Auspuffrohr-Montagesysteme auf Federbasis verwenden drei Federn, die gleichmäßig um den inneren Umfang des Auspuffrohrs angeordnet sind. Die Federn weisen eine W-artige Wellenstruktur mit zwei Aufwärtswellen und zwei Abwärtswellen und zackenartige Elemente am distalen Ende des Federelements auf. Die zackenartigen Elemente greifen in die Oberfläche des Auslassrohrs.

Jede Biegezone entlang des Federelements weist denselben Biegeradius von ungefähr 2,5 mm auf. Dies führt zu einer äußerst hohen Montagekraft, die erforderlich ist, wenn das Auspuffrohr auf den Endbereich des Auslassrohrs geschoben wird.

Wenn Auspuffrohre an einem Auslassrohr von Kraftfahrzeugen montiert werden, ist es auch bekannt, Rohrschellen zu verwenden. Mehrere Auslassrohrschellen sind bekannt. Die bekannten Rohrschellen umfassen gewöhnlich einen Bandteil, der sich um die zu verbindenden Rohre erstrecken soll. Außerdem weisen die Rohrschellen des Standes der Technik einen Flansch an jedem Ende des Bandabschnitts auf. Gewöhnlich sind die Flansche mit einem oder mehreren Löchern für die Befestigungsmittel, z.B. für einen Bolzen und eine Mutter, versehen.

Ein Beispiel einer Auslassschelle, die zum Montieren von Auspuffrohren an Auslassrohren geeignet ist, ist in der WO 2014/071950 A offenbart.

Diese Typen von Schellen sind beim Montieren des Auspuffrohrs am Auslassrohr mittels einer Teleskoprohrverbindung wirksam, um die die Rohrschelle zur Befestigung des Auspuffrohrs am Auslassrohr vorgesehen wird. Eine solche Rohrverbindung zwischen dem Auspuffrohr und dem Auslassrohr kann jedoch in Abhängigkeit vom Design des hinteren Endes des Fahrzeugs, z. B. des hinteren Stoßfängerbereichs, sichtbar sein.

Außerdem erfordert die Verwendung einer Auspuffrohrschelle ein effektives Festziehen unter Verwendung von Werkzeugen. Außerdem erfordert die Verwendung einer Rohrschelle, dass die Schelle korrekt auf die Teleskoprohrverbindung zwischen dem Auspuffrohr und dem Auslassrohr ausgerichtet wird. Dies macht die Montage eines Auspuffrohrs zeitaufwendig und komplex.

Auspuffrohre mit Spannfederblättern sind aus der CN 203 756 298 U, der DE 11 2015 000 497 T5 und der CN 202 402 119 U bekannt geworden.

### Aufgabe der Erfindung

Folglich ist es eine Aufgabe der vorliegenden Erfindung, ein signifikant verbessertes Auslassauspuffrohr-Montagesystem zu schaffen, das das Auspuffrohr effektiv an einem Auslassrohr montiert.

Es ist auch eine Aufgabe der vorliegenden Erfindung, ein Auslassauspuffrohr-Montagesystem zu schaffen, das das Risiko des Bruchs der Federn und/oder der Verformung des Auspuffrohrs und/oder des Auslassrohrs während der Montage des Auspuffrohrs am Auslassrohr verringert.

Es' ist auch eine Aufgabe der vorliegenden Erfindung, ein Auslassauspuffrohr-Montagesystem zu schaffen, das eine geringe Montagekraft erfordert, wenn das Auspuffrohr am Auslassrohr montiert wird, während das Aufrechterhalten einer hohen Zugkraft zum Ziehen des Auspuffrohrs vom Auslassrohr erforderlich ist.

Es ist auch eine Aufgabe der vorliegenden Erfindung, ein Auslassauspuffrohr-Montagesystem zu schaffen, das diebstahlsicher ist.

Es ist auch eine Aufgabe der vorliegenden Erfindung, ein Auslassauspuffrohr-Montagesystem zu schaffen, das weniger oder keine Werkzeuge zum Montieren des Auspuffrohrs am Auslassrohr erfordert.

Folglich ist es auch eine Aufgabe der vorliegenden Erfindung, ein Auslassauspuffrohr-Montagesystem zu schaffen, das die Automatisierung der Montage des Auspuffrohrs möglich macht, z.B. unter Verwendung von Robotern.

### Beschreibung der Erfindung

Diese Aufgaben werden erfindungsgemäß mit einem Auslassauspuffrohr-Montagesystem gemäß Patentanspruch 1 gelöst. Die Unteransprüche geben zweckmäßige Weiterbildungen an.

Die Aufgaben werden durch ein Auslassauspuffrohr-Montagesystem zum Montieren eines Auspuffrohrs an einem Auslassrohrende mit einer Federanordnung von mindestens drei Federelementen, die am Auspuffrohr anbringbar sind, erfüllt, wobei jedes Federelement in eine Wellenform gebogen ist. Jede der Federn umfasst ein erstes Ende mit einem Verbindungsendteil, der zur Verbindung mit einer inneren Oberfläche eines Auspuffrohrs vorgesehen ist, und ein zweites Ende, das einen Greifteil des distalen Endes bildet, mit mindestens einem Ausschnitt am distalen Ende der Feder zum Ausbilden von mindestens zwei spitzen Enden, und wobei die spitzen Enden des Greifteils zum Greifen in eine äußere Oberfläche eines Auslassrohrs vorgesehen sind.

Die Wellenform jeder Feder ist definiert durch eine erste Biegezone zwischen dem Verbindungsendteil und einem ersten Abwärtswellenteil, wobei der erste Abwärtswellenteil eine zweite und eine dritte Biegezone umfasst. Die zweite Biegezone weist einen Biegeradius von 2,5 mm bis 5,5 mm (an der Unterseite der Feder) auf und die dritte Biegezone weist einen Biegeradius von 2,0 mm bis 3,0 mm (an der Oberseite der Feder) auf, einen ersten Aufwärtswellenteil mit einer vierten Biegezone, einen zweiten Abwärtswellenteil mit einer fünften Biegezone und einer sechsten Biegezone, wobei der fünfte Biegeradius mindestens 8,0 mm an der Oberseite der Feder ist und wobei die sechste Biegezone einen Biegeradius von 2,0 mm bis 3,0 mm (an der Unterseite der Feder) aufweist, und wobei dem zweiten Abwärtswellenteil ein zweiter Aufwärtswellenteil mit einer siebten Biegezone folgt, die den zweiten Abwärtswellenteil und den Greifteil des distalen Endes verbindet, wobei die siebte Biegezone den Greifteil des distalen Endes mit einem sich aufwärts erstreckenden Federteil zwischen der sechsten und der siebten Biegezone in einem Winkel von 35° bis 45° verbindet, und wobei der Greifteil des distalen Endes in einem Winkel von 75° - 85° in Bezug auf die Längsachse der Feder abgewinkelt ist.

Hierdurch wird ein Auslassauspuffrohr-Montagesystem erhalten, das effektiv und leicht das Auspuffrohr an einem Auslassrohr montiert. Die geringe Montagekraft, die zum Aufbringen des Auspuffrohrs auf das Auslassrohr erforderlich ist, führt zu einem geringen Risiko einer Verformung des Auspuffrohrs und/oder des Auslassrohrs während der Montage des Auspuffrohrs am Auslassrohr. Außerdem wird das Risiko für das Verursachen einer Verformung des Auspuffrohrs und/oder des Auslassrohrs aufgrund eines Überanziehens von Schellen beseitigt.

Ferner verringert eine geringe Montagekraft das Risiko für das Zerstören von irgendeiner der Federn und fördert ein geringes Fehlerrisiko, wenn Auspuffrohre montiert werden, aufgrund einer Verformung oder eines Bruchs von einer oder mehreren Federn. Ferner sind weniger oder keine Werkzeuge zum Montieren des Auspuffrohrs am Auslassrohr erforderlich.

Ferner ist eine geringe Montagekraft erforderlich, wenn das Auspuffrohr am Auslassrohr montiert wird, während das Aufrechterhalten einer hohen Zugkraft zum Ziehen des Auspuffrohrs vom Auslassrohr erforderlich ist. Die hohe Zugkraft führt auch zu einem diebstahlsicheren System, da es in der Praxis fast unmöglich ist, das Auspuffrohr ohne Werkzeuge vom Auslassrohr zu ziehen.

Folglich ist das Auslassauspuffrohr-Montagesystem auch für die Automatisierung der Montage des Auspuffrohrs, die z.B. unter Verwendung von Robotern möglich ist, geeignet.

Eine Anzahl von Federn wird an ihrem Verbindungsendteil an der inneren Oberfläche des Auspuffrohrs z. B. durch Schweißen, Hartlöten oder ähnlichen dauerhaften Befestigungsmitteln befestigt. Die Federn werden mit den Zacken am distalen Ende in Richtung des äußeren Endes des Auspuffrohrs und dem Verbindungsteil in Richtung des Endes, von dem das Auspuffrohr am Auslassrohr montiert wird, montiert.

Wenn die Federn am Auspuffrohr befestigt sind, wird das Auspuffrohr zur Montage des Auspuffrohrs einfach auf das Ende des Auslassrohrs in einer Richtung geschoben, in der der erste sich abwärts erstreckende Wellenteil der Feder mit dem Auslassrohr zuerst in Eingriff kommt, gefolgt vom zweiten sich abwärts erstreckenden Wellenteil, und schließlich kommen die Zacken am distalen Ende mit dem Auslassrohr in Eingriff. Die Federn werden folglich zwischen dem Auspuffrohr und dem Auslassrohr angeordnet. Die sich aufwärts erstreckenden Wellenteile liegen an der inneren Oberfläche des Auspuffrohrs an, während der horizontale Federteil der sich abwärts erstreckenden Wellenteile an der äußeren Oberfläche des Auslassrohrs anliegt und einen Reibungsgriff an der äußeren Oberfläche des Auslassrohrs schafft.

Bestimmte Aspekte der Feder sind zum Aufrechterhalten einer hohen Zugkraft und zum Erhalten einer geringen Montagekraft wichtig.

Die Federelemente weisen im Allgemeinen eine W-artige Form zwischen einem Verbindungsteil an einem ersten Ende der Feder, der zur Verbindung mit einer inneren Oberfläche eines Auspuffrohrs vorgesehen ist, und einem zweiten Ende mit einem hakenartigen Endgreifteil auf.

Der hakenartige Endgreifteil umfasst mindestens einen Ausschnitt am distalen Ende der Feder zum Ausbilden mindestens eines oder vorzugsweise zwei spitzer Enden, die als Zacken wirken. Die Zacken graben sich in die äußere Oberfläche des Auslassrohrs ein, um sicherzustellen, dass das Auspuffrohr nicht vom Auslassrohr abfallen kann.

Die ersten und zweiten sich abwärts erstreckenden Wellenteile jedes Federelements sind zum Anliegen an der äußeren Oberfläche des Auslassrohrs bestimmt und richten folglich die Position des Auspuffrohrs am Auslassrohr aus.

Der erste und der zweite sich aufwärts erstreckende Wellenteil jedes Federelements sind zum Anliegen an der inneren Oberfläche des Auspuffrohrs bestimmt und unterstützen folglich auch beim Ausrichten der Position des Auspuffrohrs am Auslassrohr.

Außerdem bauen der zweite sich abwärts erstreckende Wellenteil und der äußerste zweite sich aufwärts erstreckende Wellenteil die Kraft auf, die auf die Zacken am Greifteil am distalen Ende des Federelements wirkt, und unterstützen folglich beim Erhöhen der Hakengreifkraft in die äußere Oberfläche des Auslassrohrs.

Die W-artige Form zwischen dem ersten Ende und dem zweiten Ende wird durch Biegen eines rechteckigen Federstahlelements in einer Anzahl von Biegezonen vorgesehen. Die Biegezonen sind senkrecht oder im Wesentlichen senkrecht zur Längsachse des Federelements vorgesehen.

Die erste Biegezone verbindet den Verbindungsteil mit dem ersten sich abwärts erstreckenden Wellenteil. Der erste sich abwärts erstreckende Wellenteil umfasst eine zweite und eine dritte Biegezone, was zu einem nach unten geneigten Federteil, einem horizontalen Federteil und einem aufwärts geneigten Federteil führt, was die sich abwärts erstreckende Wellenform schafft.

Der erste sich aufwärts erstreckende Wellenteil weist eine vierte Biegezone auf, die die geneigten Federteile der ersten und zweiten sich abwärts erstreckenden Federteile verbindet.

Der zweite sich abwärts erstreckende Wellenteil weist eine fünfte Biegezone und eine sechste Biegezone auf, was zu einem abwärts geneigten Federteil, einem horizontalen Federteil und einem aufwärts geneigten Federteil führt, was die zweite sich abwärts erstreckende Wellenform schafft.

Dem zweiten Abwärtswellenteil folgt ein zweiter sich aufwärts erstreckender Wellenteil mit einer siebten Biegezone. Die siebte Biegezone verbindet den distalen geneigten Federteil des zweiten sich abwärts erstreckenden Wellenteils und den Greifteil des distalen Endes.

Am ersten sich abwärts erstreckenden Wellenteil weist die zweite Biegezone einen Biegeradius von 2,5 mm bis 5,5 mm (an der Unterseite der Feder) auf, der zu einer anfänglichen Montagekraft von ungefähr 100-200 N führt. Die zweite Biegezone ist der erste Teil der Feder, der mit der äußeren Oberfläche des Auslassrohrs in Kontakt kommt, wenn das Auspuffrohr montiert wird, was zu einer anfänglichen Montagekraft führt, die zum Schieben der unteren Oberfläche des ersten Abwärtswellenteils über die äußere Oberfläche des Auslassrohrs erforderlich ist. Folglich ist die Größe des Radius in der zweiten Biegezone zum Einstellen der Montagekraft wichtig, während auch die Maßstabilität der Feder aufrechterhalten wird. Eine Vergrößerung des Biegeradius in der zweiten Biegezone verringert die Montagekraft, die zum Schieben des Auspuffrohrs mit den Federn, die an der inneren Oberfläche befestigt sind, auf das Auslassrohr erforderlich ist, insbesondere wenn der erste sich abwärts erstreckende Wellenteil der Federn mit der äußeren Oberfläche des Auslassrohrs in Kontakt geführt wird. Wenn jedoch ein großer Radius an der zweiten Biegezone verwendet wird, wird die Feder weniger maßstabil oder weniger steif.

Die dritte Biegezone und die sechste Biegezone weisen einen Biegeradius (an der Oberseite der Feder) von 2,0 mm bis 3,0 mm und vorzugsweise 2,4 mm bis 2,6 mm auf, um die Form und Steifigkeit der Feder aufrechtzuerhalten. Außerdem ist eine ausreichende Spannung für die Feder vorgesehen, um eine korrekte Ausrichtung des Auspuffrohrs in Bezug auf das Auslassrohr zu schaffen, wenn es daran montiert wird.

Die fünfte Biegezone ist der erste Teil des zweiten Abwärtswellenteils der Feder, der mit der äußeren Oberfläche des Auslassrohrs in Kontakt kommt, wenn das Auspuffrohr montiert wird, was zu einer Zwischenerhöhung der Montagekraft führt, die zum Schieben der unteren Oberfläche des zweiten Abwärtswellenteils über die äußere Oberfläche des Auslassrohrs erforderlich ist.

In der fünften Biegezone ist der Biegeradius (an der Oberseite der Feder) mindestens 8,0 mm und vorzugsweise 0,8 mm bis 15 mm oder bevorzugter 10,5 mm bis 12,5 mm. Wenn der zweite Abwärtswellenteil mit der äußeren Oberfläche des Auslassrohrs in Kontakt kommt, liegt hierdurch die Zwischenmontagekraft im Bereich von ungefähr 100-200 N. Die Größe des Radius in der fünften Biegezone ist wichtig zum Verringern der schrittweisen Zwischenzunahme der Montagekraft, wenn der horizontale Teil des zweiten sich abwärts erstreckenden Wellenteils der Federn mit der äußeren Oberfläche des Auslassrohrs in Kontakt geführt wird. Eine Vergrößerung des Biegeradius in der fünften Biegezone führt zu einer verringerten Erhöhung der Montagekraft, die zum Schieben des Auspuffrohrs mit den an der inneren Oberfläche befestigten Federn auf das Auslassrohr erforderlich ist, während der zweite sich abwärts erstreckende Wellenteil der Federn auf das Auslassrohr geführt wird, während auch die Maßstabilität der Feder aufrechterhalten wird. Der Radius in der fünften Biegezone ist vorzugsweise so groß wie möglich, um irgendeine höhere Montagekraft zu vermeiden. Der Radius der fünften Biegezone kann groß sein, da die spitzen Enden am Endgreifteil, die darin greifen, beim Stabilisieren der Verbindung zwischen dem Auspuffrohr und dem Auslassrohr helfen.

Die erste Biegezone kann einen Biegeradius (an der Unterseite der Feder) von 1,0 mm bis 2,0 mm und vorzugsweise 1,4 mm bis 1,6 mm aufweisen, da ein Biegeradius, der so klein wie möglich ist, Steifigkeit für die Feder im Bereich des Winkels zwischen dem Verbindungsteil und dem ersten geneigten Federteil des ersten sich abwärts erstreckenden Wellenteils schafft.

Vorzugsweise weisen die vierte und die siebte Biegezone jeweils einen Biegeradius (an der Unterseite der Feder) von 1,0 mm bis 4,5 mm oder vorzugsweise 1,5 mm bis 3,5 mm auf, um eine ausreichende Spannung in der Feder zu schaffen, während auch vermieden wird, dass die Feder Markierungen im Auspuffrohr hinterlässt.

Außerdem beeinflussen die Zacken die Montagekraft, die zum Schieben der Zacken gegen die Oberfläche erforderlich ist, wobei sie die Oberfläche des Auslassrohrs treffen, was eine Montagekraft, die zum Schieben des Auspuffrohrs auf das Auslassrohr erforderlich ist, in einem dritten Schritt von bis zu 200-350 N oder noch niedriger erfordert.

Der Winkel, in dem der Greifteil des distalen Endes, d. h. die Zacken, auf die äußere Oberfläche trifft, ist wichtig für die zum Abziehen des Auspuffrohrs erforderliche Kraft. Eine hohe Kraft zum Abziehen des Auspuffrohrs ist zum Beseitigen irgendeines unabsichtlichen Verlusts des Auspuffrohrs während der normalen Verwendung des Fahrzeugs erforderlich. Die anfängliche Zugkraft, d. h. unmittelbar nach der Montage, sollte mindestens 250 N sein, um irgendeine unabsichtliche Demontage des Auspuffrohrs zu verhindern, d. h. durch Diebstahl, oder dass das Auspuffrohr vom Auslassrohr aufgrund von Vibrationen abfällt. In der Praxis liegt die Zugkraft im Bereich von 350-650 N oder noch höher, insbesondere nach einer gewissen Zeit nach dem Montieren des Auspuffrohrs.

Außerdem beeinflusst der Winkel der Zacken gegenüber der äußeren Oberfläche des Auslassrohrs die Montagekraft, die zum Schieben der Zacken gegen die Oberfläche erforderlich ist, wobei sie die Oberfläche des Auslassrohrs treffen.

Folglich ist der Winkel in der siebten Biegezone, d. h. zwischen unteren Oberflächen an den Federteilen am Greifteil des distalen Endes und einem sich aufwärts erstreckenden Federteil zwischen der sechsten und der siebten Biegezone 35° bis 45° vor dem Montieren des Auspuffrohrs am Auslassrohr. Dies schafft eine relativ niedrige Montagekraft.

Dieser anfänglich bereitgestellte Winkel wird bis zu 45-90° vergrößert, wenn das Auspuffrohr am Auslassrohr montiert wird, aufgrund der Spannung von der Feder, die sich daraus ergibt, dass die Feder zwischen der äußeren Oberfläche des Auslassrohrs und der inneren Oberfläche des Auspuffrohrs gequetscht wird, wenn das Auspuffrohr am Auslassrohr montiert wird. Dies führt zu einer Verformung der siebten Biegezone und verringert den Winkel zwischen den Zacken und der äußeren Oberfläche des Auslassrohrs, wodurch die Zacken ihren Effekt vergrößern, und die Zugkraft, die zum Demontieren des Auspuffrohrs vom Auslassrohr erforderlich ist, noch weiter erhöht wird.

Der Greifteil des distalen Endes ist anfänglich in einem Winkel von 75°-85° in Bezug auf die Längsachse der Feder abgewinkelt. Wenn der anfänglich bereitgestellte Winkel geringer ist, wird die auf die Zacken wirkende Kraft verringert, was zu einem verringerten Zackeneffekt gegen das Auslassrohr führt. Wenn der Winkel größer ist, nimmt die Montagekraft zu.

Vorzugsweise ist der Winkel an der unteren Oberfläche in der ersten Biegezone in einem Winkel von 125° bis 145° und vorzugsweise 130-140° in Bezug auf die Längsachse der Feder gebogen und/oder die dritte Biegezone ist gebogen, um 110° bis 130° und vorzugsweise 115°-125° an der oberen Oberfläche der Feder in Bezug auf die Längsachse der Feder bereitzustellen. Vorzugsweise ist die vierte Biegezone in einem Winkel von 55° bis 75° und vorzugsweise 60°-70° an der unteren Oberfläche der Feder gebogen und/oder die sechste Biegezone ist in einem Winkel an der oberen Oberfläche der Feder von 110° bis 130° und vorzugsweise 115°-125° in Bezug auf die Längsachse der Feder gebogen. Diese Winkel werden aus Erfahrung ausgewählt und sollten nicht um mehr als 5-10 Grad abweichen. Wenn der Winkel groß ist, besteht ein Risiko für den Verlust der Stabilität der Form der Feder, wohingegen, wenn der Winkel klein ist, die Montagekraft zunehmen kann.

Die vorstehend erwähnten Winkel hängen auch von der Größe des Biegeradius in der relevanten Position der relevanten Biegezone der Feder ab.

Wie vorstehend erwähnt, sind die Federn an der inneren Oberfläche des Auspuffrohrs befestigt. Mindestens drei, vorzugsweise mindestens vier, insbesondere fünf oder sieben Federn sind an einem Auspuffrohr befestigt. Das Risiko einer Fehlausrichtung des Auspuffrohrs aufgrund einer fehlerhaften Feder wird beseitigt, wenn fünf oder sieben Federelemente verwendet werden.

Alternativ sind die mindestens drei, vorzugsweise mindestens vier, insbesondere fünf oder sieben Federelemente an einem Ringelement mit einem Außendurchmesser, der dem Innendurchmesser des Auspuffrohrs entspricht, befestigt.

Hierdurch ist es möglich, die Federn am Ringelement separat zu montieren und dann das Ringelement im Auspuffrohr zu befestigen. Das Ringelement mit den daran befestigten Federn wird am Auspuffrohr mittels eines Montageflanschs befestigt, der die Federanordnung im Auspuffrohr in Position hält. Der Montageflansch wird am Auspuffrohr mittels z. B. einer oder mehreren Schrauben oder Bolzen und Muttern oder Zapfen oder Nieten durch ein oder mehrere Löcher im Auspuffrohr befestigt. Dies beseitigt den Bedarf am Schweißen der Federn an die innere Oberfläche des Auspuffrohrs in Positionen, die aufgrund des begrenzten Zugangs durch die Auspuffrohröffnung schwer zugänglich sein können.

Das Federelement kann einen bogenförmigen Querschnitt in einem Querschnitt senkrecht zur Längsachse des Federelements gesehen aufweisen, wobei die Bogenform der oberen Oberfläche des Federelements der inneren Oberfläche des Auspuffrohrs entspricht. Dadurch folgt die obere Oberfläche der Feder, insbesondere im Verbindungsbereich und an der oberen Oberfläche der sich aufwärts erstreckenden Wellenteile, dem Auspuffrohr-Innendurchmesser, was irgendein Risiko für eine Verformung im Auspuffrohr beseitigt oder verringert.

Die Feder besteht vorzugsweise aus Edelstahl, insbesondere einer austenitischen 18-8-Chrom-Nickel-Edelstahllegierung. Edelstahl X10CrNi 18-8 Nr. 1.4310, wie in der Materialnorm EN 10088-2:2205 definiert, ist beispielsweise für Federn gemäß der vor liegenden Erfindung geeignet, wenn sie zum Montieren eines Auspuffrohrs an Auslassrohren der Stahltypen verwendet werden, die am üblichsten in Auslassrohren verwendet werden. Die Federzugfestigkeit ist 1000-1700 N/mm² entsprechend der Klasse +C1000 bis +C1500, wie in EN 10151:2002 definiert.

Typischerweise bestehen Auslassrohre aus Edelstahltypen wie z. B. Edelstahl X5CrNi18-10 Nr. 1.4301, X5CrNiMo17-12-2 Nr. 1.4401, X2CrTiNb18 oder 1.4509, wie in der Materialnorm EN 10088-2:2005 definiert.

Der Federstahlstreifen kann eine Dicke von 0,4-1,0 mm und vorzugsweise 0,5-0,8 mm in Abhängigkeit vom Durchmesser des Auslassrohrs und des Auspuffrohrs und der erforderlichen Montage- und/oder Zugkraft aufweisen.

Die Federstreifenbreite, d. h. senkrecht zur Längsachse der Feder, liegt vorzugsweise im Bereich von 5-15 mm oder vorzugsweise 8-12 mm in Abhängigkeit vom Durchmesser des Auslassrohrs und des Auspuffrohrs und der erforderlichen Montage- und/oder Zugkraft.

Die Gesamtlänge der Feder hängt von der Größe, insbesondere der Länge des Auspuffrohrs, ab und ist vorzugsweise 50-100 mm. Die Länge der Feder wird vor zugsweise durch Ändern des Abstandes zwischen der zweiten und der dritten Biegezone und/oder zwischen der fünften und der sechsten Biegezone verändert. Gewöhnlich ist eine Gesamtlänge der Feder von 60-80 mm für die Montage von Auspuffrohren an Personenwagen ausreichend.

Die Feder kann einen zusätzlichen Abwärtswellenteil und einen zusätzlichen ersten Aufwärtswellenteil zwischen dem ersten Aufwärtswellenteil und dem zweiten Abwärtswellenteil umfassen, z. B. falls ein langes Auspuffrohr am Auslassrohr installiert werden soll. Hierdurch wird es möglich, eine längere Feder ohne Gefährden der Stabilität und Montagekraft und/oder Zugkraft vorzusehen.

### Beschreibung der Zeichnung

Weitere Merkmale und Vorteile ergeben sich aus der Zeichnung. Die verschiedenen Merkmale können je einzeln für sich oder zu mehreren in beliebigen Kombinationen bei Varianten der Erfindung verwirklicht sein. Die vorliegende Erfindung wird mit Bezug auf die Zeichnungen im Einzelnen beschrieben, in denen
Fig. 1 eine perspektivische Ansicht einer Feder einer Auspuffrohr-Montageanordnung gemäß der vorliegenden Erfindung zeigt,
Fig. 2 eine Querschnittsansicht durch A-A von Fig. 4 eines Auspuffrohrs zeigt, das an einem Auslassrohr unter Verwendung der erfindungsgemäßen Montageanordnung auf Federbasis montiert ist,
Fig. 3 eine Ansicht einer Ausführungsform des Auspuffrohr-Montagesystems in auseinandergezogener Anordnung zeigt,
Fig. 4 einen Querschnitt durch B-B von Fig. 2 eines an einem Auslassrohr unter Verwendung der erfindungsgemäßen Montageanordnung auf Federbasis montierten Auspuffrohrs zeigt,
Fig. 5-6 eine Seitenansicht eines Federelements zeigen, das in einem Auspuffrohr-Montagesystem gemäß der Erfindung verwendet wird,
Fig. 7 ein Detail der Feder in einer Querschnittsansicht eines Auspuffrohrs zeigt, das an einem Auslassrohr unter Verwendung der erfindungsgemäßen Montageanordnung auf Federbasis montiert ist, und
Fig. 8-9 Graphen der Montagekraft und der Zugkraft als Funktion des Abstandes zeigen.

### Ausführliche Beschreibung der Erfindung

Das Auslassauspuffrohr-Montagesystem zum Montieren eines Auspuffrohrs 1 an einem Ende eines Auslassrohrs 2 umfasst eine Federanordnung von mindestens drei Federelementen 3, vorzugsweise mindestens vier wie z. B. fünf oder sieben Federn 3, die am Auspuffrohr 1 befestigt werden sollen.

Die Federn werden an ihrem Verbindungsendteil 9 an der inneren Oberfläche 10 des Auspuffrohrs 1 z. B. durch Schweißen, Hartlöten oder eines ähnlichen dauerhaften Befestigungsmittels (nicht dargestellt) befestigt. Die Federn 3 werden mit den Zacken 13 in Richtung des äußeren Endes 26 des Auspuffrohrs und dem Verbindungsteil 9 in Richtung des Endes, von dem das Auspuffrohr 1 am Auslassrohr 2 montiert wird, montiert.

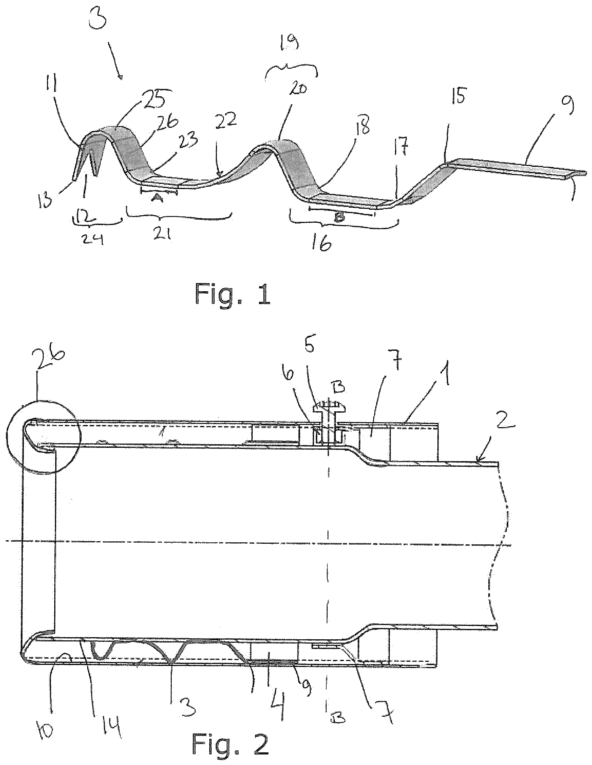

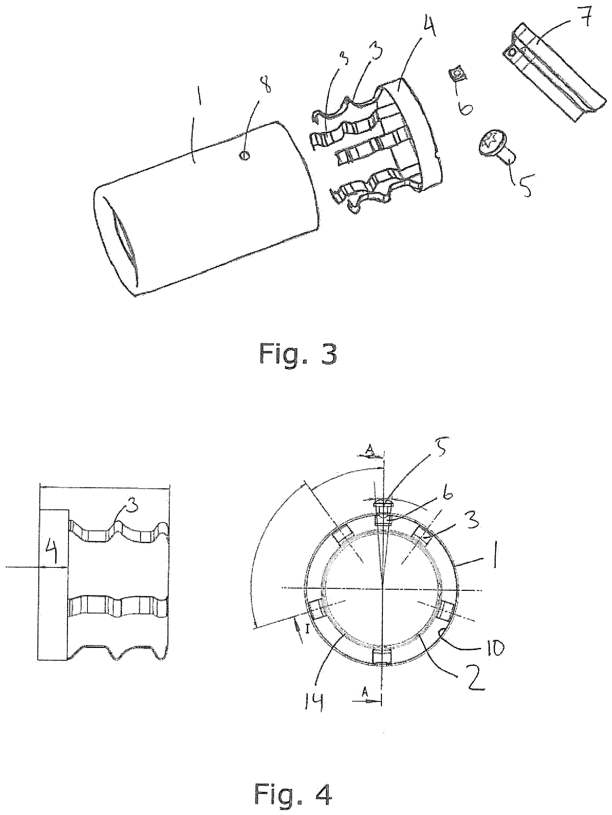

Alternativ werden die mindestens drei, vorzugsweise mindestens vier, insbesondere fünf oder sieben Federn 3 an einem Ringelement 4 befestigt, wie in Fig. 2-4 gezeigt. Das Ringelement weist einen Außendurchmesser auf, der dem Innendurchmesser des Auspuffrohrs 1 entspricht. Das Ringelement wird im Auspuffrohr 1 angeordnet und am Auspuffrohr 1 mittels eines Montageflanschs 7 befestigt, der die Federanordnung im Auspuffrohr 1 in Position hält. Der Montageflansch 7 wird dann am Auspuffrohr mittels z. B. einer oder mehreren Schrauben oder Bolzen 5 und Muttern 6 oder Zapfen oder Nieten durch ein oder mehrere Löcher 8 im Auspuffrohr 1 befestigt.

Wenn die Federn 3 am Auspuffrohr 1 befestigt werden, wird das Auspuffrohr 1 zum Montieren des Auspuffrohrs einfach auf das Ende des Auslassrohrs 2 geschoben. Während der Montage des Auspuffrohrs 1 kommt folglich der erste sich abwärts erstreckende Wellenteil 16 der Feder mit dem Auslassrohr zuerst in Eingriff, was zu einer anfänglichen Montagekraft führt, die zur Montage erforderlich ist. Dann kommt der zweite sich abwärts erstreckende Wellenteil 21 und schließlich die Zacken 13 am distalen Ende mit der äußeren Oberfläche 14 des Auslassrohrs 2 in Eingriff, was zu einer Zwischenerhöhung der Montagekraft und der endgültigen Montagekraft führt.

Die Federn 3 werden folglich zwischen dem Auspuffrohr 1 und dem Auslassrohr 2 angeordnet, wenn sie montiert werden. Die sich aufwärts erstreckenden Wellenteile 19, 24 liegen an der inneren Oberfläche des Auspuffrohrs an, während der horizontale Federteil der sich abwärts erstreckenden Wellenteile 16, 21 an der äußeren Oberfläche 14 des Auslassrohrs 2 anliegt und einen Reibungsgriff an der äußeren Oberfläche des Auslassrohrs schafft.

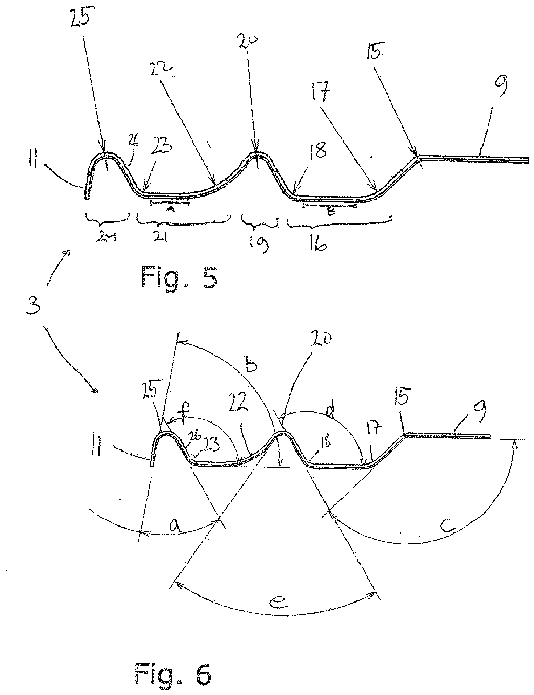

Die Federkonstruktion ist in Fig. 1 und 5-6 zu sehen.

Jedes Federelement ist in eine Wellenform mit einer im Allgemeinen W-artigen Form zwischen einem ersten Ende mit einem Verbindungsendteil 9, der zur Verbindung mit einer inneren Oberfläche eines Auspuffrohrs vorgesehen ist, und einem zweiten Ende, d. h. einem distalen Ende, das einen Greifteil 11 des distalen Endes bildet, gebogen.

Das Federelement 3 kann einen bogenförmigen Querschnitt in einem Querschnitt senkrecht zur Längsachse des Federelements 3 gesehen aufweisen. Die Bogenform der oberen Oberfläche der Feder 3 entspricht dem Durchmesser der inneren Oberfläche des Auspuffrohrs 1.

Der Greifteil 11 des distalen Endes umfasst mindestens einen Ausschnitt 12 am distalen Ende der Feder zum Ausbilden mindestens eines und vorzugsweise zwei spitzer Enden 13, die als Zacken 13 wirken, die zum Eingraben in eine äußere Oberfläche 14 des Auslassrohrs 2 vorgesehen sind.

Die W-artige Form zwischen dem ersten Ende und den zweiten Enden der Feder 3 wird durch Biegen eines rechteckigen Federstahlelements in einer Anzahl von Biegezonen bereitgestellt. Die Biegezonen werden senkrecht oder im Wesentlichen senkrecht zu den Längsachsen des Federelements 3 bereitgestellt. Die Biegezonen werden in der Reihenfolge vom Verbindungsendteil 9 in Richtung des Greifteils 11 des distalen Endes beschrieben.

Die erste Biegezone 15 verbindet den Verbindungsendteil 9 und einen ersten Abwärtswellenteil 16. Die erste Biegezone 15 kann einen Biegeradius (an der Unterseite der Feder) von 1,0 mm bis 2,0 mm und vorzugsweise 1,4 mm bis 1,6 mm aufweisen. Ein Biegeradius, der so klein wie möglich ist, in der ersten Biegezone 15 schafft Steifigkeit für die Feder in dem Bereich.

Der erste Abwärtswellenteil 16 umfasst eine zweite 17 und eine dritte 18 Biegezone, was zu einem abwärts geneigten Federteil, einem horizontalen Federteil und einem aufwärts geneigten Federteil führt.

Die zweite Biegezone 17 weist einen Biegeradius (an der Unterseite der Feder) von 2,5 mm bis 5,5 mm, vorzugsweise 4,5 mm bis 5,5 mm auf. Die zweite Biegezone 17 ist der erste Teil der Feder, der mit der äußeren Oberfläche 14 des Auslassrohrs in Kontakt kommt, wenn das Auspuffrohr montiert wird. Der Kontakt führt zu einer anfänglichen Montagekraft von ungefähr 100-200 N, die zum Schieben der unteren Oberfläche des ersten Abwärtswellenteils 16 über die äußere Oberfläche 14 des Auslassrohrs 1 erforderlich ist. Eine Vergrößerung des Biegeradius in der zweiten Biegezone 17 verringert die anfängliche Montagekraft, die zum Schieben des Auspuffrohrs mit den Federn, die an der inneren Oberfläche befestigt sind, auf das Auslassrohr erforderlich ist.

Die dritte Biegezone 18 weist einen Biegeradius (an der Oberseite der Feder) von 2,0 mm bis 3,0 mm und vorzugsweise 2,4 mm bis 2,6 mm auf, um die Form und Steifigkeit der Feder aufrechtzuerhalten.

Dem ersten Abwärtswellenteil 16 folgt ein erster Aufwärtswellenteil 19 mit einer vierten Biegezone 20, die die geneigten Federteile des ersten 16 und des zweiten 21 sich abwärts erstreckenden Wellenteils der Feder verbindet.

Der erste sich aufwärts erstreckende Wellenteil 19 der Feder ist zum Anliegen an der inneren Oberfläche 10 des Auspuffrohrs 1 vorgesehen. Die vierte Biegezone 20 weist einen Biegeradius (an der Oberseite der Feder) von 1,0 mm bis 4,5 mm oder vorzugsweise 1,5 mm bis 3,5 mm auf.

Der zweite Abwärtswellenteil 21 weist eine fünfte Biegezone 22 und eine sechste Biegezone 23 auf, was zu einem abwärts geneigten Federteil, einem horizontalen Federteil und einem aufwärts geneigten Federteil 26 führt, was die zweite sich abwärts erstreckende Wellenform schafft. Der Biegeradius (an der Oberseite der Feder) in der fünften Biegezone 22 ist mindestens 8,0 mm, vorzugsweise 8,0 mm bis 15 mm oder bevorzugter 10,5 mm bis 12,5 mm. Hierdurch ist die Montagekraft im zweiten Schritt ungefähr 100-200. Der zweite sich abwärts erstreckende Wellenteil 21 ist zum Anliegen an der äußeren Oberfläche 14 des Auslassrohrs 2 und Ausrichten des Auspuffrohrs 1 am Auslassrohr 2 bestimmt. Die Größe des Radius in der fünften Biegezone 22 ist zum Verringern der schrittweisen Zwischenvergrößerung der Montagekraft, wenn der horizontale Teil des zweiten sich abwärts erstreckenden Wellenteils der Federn mit der äußeren Oberfläche des Auslassrohrs in Kontakt geführt wird, wichtig, wie vorstehend erläutert.

Die fünfte Biegezone 22 ist der erste Teil des zweiten Abwärtswellenteils der Feder, der mit der äußeren Oberfläche des Auslassrohrs in Kontakt kommt, wenn das Auspuffrohr montiert wird, was zu einer Zwischenerhöhung der Montagekraft führt, die zum Schieben der unteren Oberfläche des zweiten Abwärtswellenteils über die äußere Oberfläche des Auslassrohrs erforderlich ist.

Die sechste Biegezone 23 weist vorzugsweise einen Biegeradius (an der Unterseite der Feder) von 2,0 mm bis 3,0 mm und vorzugsweise 2,4 mm bis 2,6 mm auf, um die Form und Steifigkeit der Feder und folglich auch eine ausreichende Spannung für die Feder aufrechtzuerhalten, um eine korrekte Ausrichtung des Auspuffrohrs 1 in Bezug auf das Auslassrohr 2 zu ermöglichen, wenn es daran montiert wird.

Dem zweiten Abwärtswellenteil 21 folgt ein zweiter Aufwärtswellenteil 24 mit einer siebten Biegezone 25, die den zweiten Abwärtswellenteil 21 und den Greifteil 11 des distalen Endes verbindet. Der zweite sich aufwärts erstreckende Wellenteil 24 ist auch zum Anliegen an der inneren Oberfläche 10 des Auspuffrohrs vorgesehen.

Vorzugsweise weist die siebte Biegezone 25 einen Biegeradius (an der Oberseite der Feder) von 1,0 mm bis 4,5 mm oder vorzugsweise 1,5 mm bis 3,5 mm auf.

Die siebte Biegezone 25 verbindet den Greifteil 11 des distalen Endes mit einem sich aufwärts erstreckenden Federteil 26 zwischen der sechsten 23 und der siebten 25 Biegezone in einem Winkel a von 35° bis 45°.

Der Greifteil 11 des distalen Endes ist in einem Winkel b von 75° - 85° in Bezug auf die Längsachse der Feder abgewinkelt.

Der zweite sich abwärts erstreckende Wellenteil 21 und der äußerste zweite sich aufwärts erstreckende Wellenteil 24 bauen die Kraft auf, die auf die Zacken 13 am Greifteil 11 wirkt, und unterstützen folglich beim Erhöhen der Zackengreifkraft in die äußere Oberfläche 14 des Auslassrohrs.

Außerdem beeinflussen die Zacken 13 die Montagekraft, die zum Schieben der Zacken 13 gegen die Oberfläche erforderlich ist, wobei sie die Oberfläche des Auslassrohrs treffen, wodurch die Montagekraft zum Schieben des Auspuffrohrs 1 auf das Auslassrohr 3 in einem dritten Schritt von bis zu 200-350 N erforderlich ist.

Der Winkel b, in dem der Greifteil 11 des distalen Endes, d. h. die Zacken 13, die äußere Oberfläche 14 des Auslassrohrs 2 trifft, ist für die Kraft wichtig, die zum Abziehen des Auspuffrohrs erforderlich ist. Eine hohe Kraft zum Abziehen des Auspuffrohrs ist zum Beseitigen von irgendeinem versehentlichen Verlust des Auspuffrohrs während der normalen Verwendung des Fahrzeugs erforderlich. Die anfängliche Zugkraft, die erforderlich ist, ist mindestens 250 N an einem Auslassrohr.

Außerdem beeinflusst der Winkel b der Zacken 13 gegenüber der äußeren Oberfläche 14 des Auslassrohrs die Montagekraft, die zum Schieben der Zacken 13 gegen die äußere Oberfläche des Auslassrohrs erforderlich ist.

Der Winkel a in der siebten Biegezone 25, d. h. zwischen den unteren Oberflächen an den Federteilen am Greifteil 11 des distalen Endes und einem sich aufwärts erstreckenden Federteil 26 zwischen der sechsten 23 und der siebten 25 Biegezone, ist folglich 35° bis 45° vor dem Montieren des Auspuffrohrs am Auslassrohr. Dies schafft eine relativ niedrige Montagekraft.

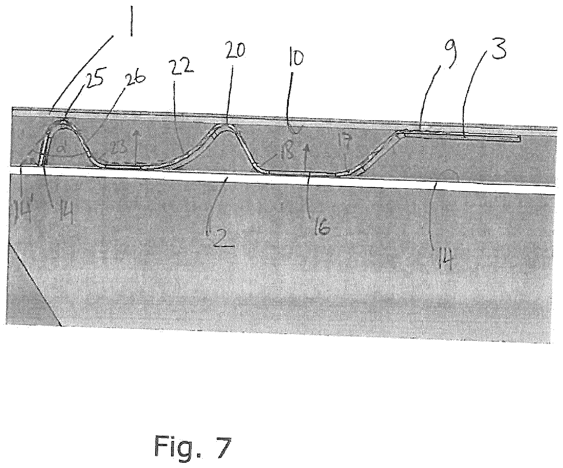

Dieser anfänglich bereitgestellte Winkel a wird bis zu 45-90° vergrößert, wie in Fig. 7 dargestellt, siehe Winkel a', wenn das Auspuffrohr 1 am Auslassrohr 2 montiert wird, was durch die Spannung von der Feder verursacht wird, die sich daraus ergibt, dass die Feder 3 zwischen der äußeren Oberfläche des Auslassrohrs 2 und der inneren Oberfläche 10 des Auspuffrohrs 1 gequetscht wird, wenn das Auspuffrohr am Auslassrohr montiert wird. Dies führt zu einer Verformung der siebten Biegezone 25 und verringert den Winkel a auf a' zwischen den Zacken 13 und der äußeren Oberfläche des Auslassrohrs, wodurch die Zacken 13 ihren Effekt erhöhen und die erforderliche Zugkraft verringern.

Der zweite Aufwärtswellenteil der Feder ist vorzugsweise in einer Höhe vorgesehen, die ungefähr 0,4-0,5 mm niedriger ist als die Ebene des ersten Aufwärtswellenteils und des Verbindungsendteils. Dies schafft einen Schlupf, der die Montagekraft verringert, wenn die Zacken über die äußere Oberfläche des Auslassrohrs während der Montage geschoben werden. Die an der Feder vorgesehene Spannung, wenn sie zwischen dem Auspuffrohr und dem Auslassrohr gequetscht wird, verursacht eine Aufwärtsbewegung der aufwärts geneigten Oberfläche 26, die den Schlupf beseitigt und einen Kontakt zwischen der inneren Oberfläche des Auspuffrohrs und der oberen Oberfläche am zweiten Aufwärtswellenteil schafft. Dies verursacht eine weitere Spannung an den Zacken 13, was die zum Abziehen des Auspuffrohrs 1 erforderliche Zugkraft weiter erhöht.

Vorzugsweise ist der Winkel c an der unteren Oberfläche in der ersten Biegezone in einem Winkel von 125° bis 145° und vorzugsweise 130° - 140° in Bezug auf die Längsachse der Feder gebogen.

Vorzugsweise ist die dritte Biegezone 18 gebogen, um einen Winkel d von 110° bis 130° und vorzugsweise 115°-125° an der oberen Oberfläche der Feder in Bezug auf die Längsachse der Feder vorzusehen.

Vorzugsweise ist die vierte Biegezone 20 in einem Winkel e von 55° bis 75° und vorzugsweise 60°-70° an der unteren Oberfläche der Feder gebogen.

Vorzugsweise ist die sechste Biegezone 22 in einem Winkel f an der oberen Oberfläche der Feder von 110° bis 130° und vorzugsweise 115° - 125° in Bezug auf die Längsachse der Feder gebogen.

Diese Winkel werden aus der Erfahrung ausgewählt und sollten nicht um mehr als 5-10 Grad abweichen. Wenn der Winkel groß ist, besteht ein Risiko des Verlusts der Stabilität der Form der Feder, wohingegen, wenn der Winkel klein ist, die Montagekraft zunehmen kann.

Die vorstehend erwähnten Winkel hängen auch von der Größe des Biegeradius in der relevanten Position der relevanten Biegezone der Feder ab.

Wenn das Auspuffrohr abgezogen wird, werden die Federn 3 oder zumindest der Greifteil 11 davon aufgrund der erforderlichen Zugkraft verformt.

### Beispiel

Die Montagekraft und die Zugkraft wurden an Federn von zwei verschiedenen Konstruktionen getestet. Die Feder 1 ist gemäß der vorliegenden Erfindung konstruiert, wohingegen die Feder 2 ein Vergleichsbeispiel ist.

Fünf Federn wurden an den inneren Umfang eines Auspuffrohrs im gleichen Abstand und wie vorstehend beschrieben geschweißt.

Die Feder 1 besteht aus Edelstahl, der in Form gebogen wird, wie in Fig. 1 und 5-6 gezeigt. Die Feder 2 des Vergleichsbeispiels weist dieselbe Länge und Breite auf und unterscheidet sich von der Feder 1 im Biegeradius der Biegezonen sowie im Winkel a des hakenartigen Endteils. Der Biegeradius jeder Biegezone und der Winkel erscheinen in der nachstehenden Tabelle 1.

Das Federmaterial ist ein Streifen von 67,5 mm Länge und 9 mm Breite. Die Zacken werden durch Vorsehen eines Ausschnitts mit einer dreieckigen Form und einem 90°-Winkel im distalen Ende des Federstreifens hergestellt. Das Federstahlmaterial ist eine austenitische Edelstahllegierung X10CrNi 18-8 Nr. 1.4310,wie in der Materialnorm EN 10088-2 definiert. Die Federzugfestigkeit ist 1000-1700 N/mm² entsprechend der Klasse +C1000 bis +C1500, wie in EN 10151:2002 definiert.

**Tabelle 1: Form der Feder 1 und 2**

| Winkel der Biegezone | Feder 1, Radius an der Oberseite der Feder (L=Unterseite; U=Oberseiten-Biegeradius); Winkel | Feder 2 Radius an der Oberseite der Feder; Winkel |
|---|---|---|
| Biegezone 1 | 2,0 mm (L) | 2,0 mm (L) |
| Biegezone 2 | 5,0 mm (L) | 2,0 mm (L) |
| Biegezone 3 | 2,5 mm (U) | 2,0 mm (U) |
| Biegezone 4 | 2,0 mm (U) | 2,0 mm (U) |
| Biegezone 5 | 11,7 mm (U) | 2,0 mm (U) |
| Biegezone 6 | 2,5 mm (L) | 2,0 mm (L) |
| Biegezone 7 | 2,76 mm (U) | 2,0 mm (U) |
| Winkel a | 40° | 55° |

Ein Auslassrestrohr aus Edelstahl X5CrNi 18-10, Nr. 1.4301, wie in der Materialnorm EN 10088-2:2005 definiert, wurde vertikal in einem Prüfstand unter Verwendung einer Befestigungsvorrichtung montiert. Das Auspuffrohr wurde in einer ersten Befestigungsvorrichtung an der Unterseite eines vertikalen Kolbens montiert. Die Montagekraft wurde gemessen, indem der Kolben eine Schubkraft auf das Auspuffrohr von oben aufbrachte, während die Montagekraft (d. h. Schubkraft; in N als Funktion des Abstandes), die zum Schieben des Auspuffrohrs in Position am Auslassrohr verwendet wurde, detektiert wurde. Nach der Vollendung der Montage des Auspuffrohrs wurde eine zweite Testbefestigungsvorrichtung am Auspuffrohr montiert. Die zweite Testbefestigungsvorrichtung kommt mit dem unteren Ende des Auspuffrohrs in Eingriff, während der Kolben zum Vorsehen einer Zugkraft im Auspuffrohr angehoben wird, während die Zugkraft (in N als Funktion des Abstandes) detektiert wird. Fünf Durchläufe mit Auspuffrohren mit der Feder 1 und fünf Durchläufe mit der Feder 2 wurden ausgeführt und die Mittelwerte wurden für die anfängliche Montagekraft (erste Abwärtswelle in Kontakt mit dem Auslassrohr); Zwischenmontagekraft (zweite Abwärtswelle in Kontakt mit dem Auslassrohr) und Endmontagekraft (Zacken in Kontakt mit dem Auslassrohr) berechnet und die gemittelte Zugkraft wurde für jeden Durchlauf berechnet. Der gesamte Mittelwert der Zugkraft in den fünf Durchläufen wurde dann berechnet. Die gemittelten Werte erscheinen in Tabelle 2.

**Tabelle 2: Mittlere onageraugra in N**

| Position | Feder 1 (N) | Feder 2 (N) |
|---|---|---|
| Erste Abwärtswelle (*1) | 153 | 340 |
| Zweite Abwärtswelle (*2) | 156 | 490 |
| Zacken (*3) | 271 | 410 |
| Zugkraft, Mittelwert (*4) | 544 | 557 |

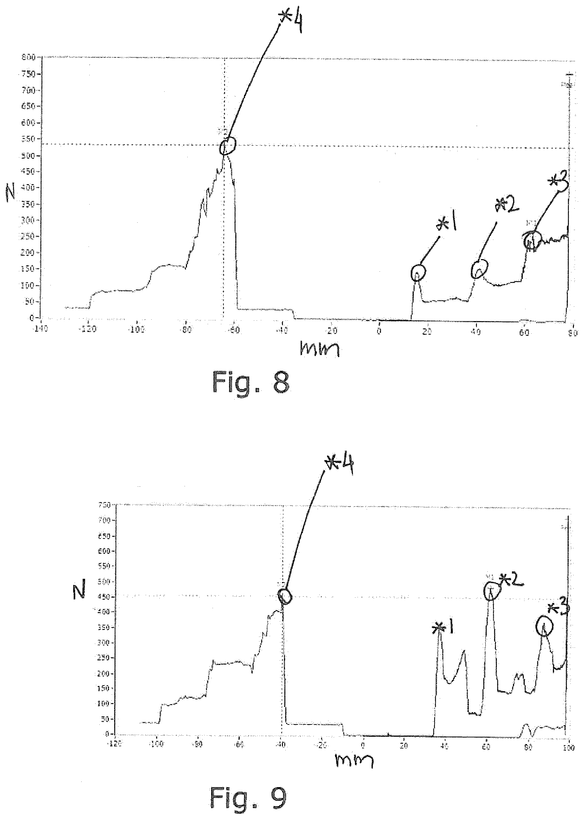

Fig. 8 zeigt die Montagekraft als Funktion des Abstandes des ersten Durchlaufs mit der Feder 1 bzw. 2. * 1 stellt die anfängliche Montagekraft dar, die verwendet wird, wenn der erste Abwärtswellenteil der Federn mit dem Auslassrohr in Kontakt kommt. *2 stellt die Zwischenmontagekraft dar, die verwendet wird, wenn der zweite Abwärtswellenteil mit dem Auslassrohr in Kontakt kommt. *3 stellt die anfängliche Montagekraft dar, die verwendet wird, wenn die Zacken der Federn mit dem Auslassrohr in Kontakt kommen. *4 stellt die maximale Zugkraft dar, die verwendet wird, wenn das Auspuffrohr vom Auslassrohr abgezogen wird.

Aus Tabelle 2 und Fig. 8-9 ist klar, dass die Konstruktion der Feder 1 eine geringere Montagekraft erfordert, während eine hohe Zugkraft aufrechterhalten wird.

## Patentansprüche

1. Auslassauspuffrohr-Montagesystem zum Montieren eines Auspuffrohrs (1) an einem Auslassrohrende, wobei das Montagesystem eine Federanordnung von mindestens drei Federelementen (3) umfasst, die am Auspuffrohr (1) befestigt werden können, wobei jedes Federelement (3) in eine Wellenform gebogen ist und
umfasst
ein erstes Ende mit einem Verbindungsendteil (9), der zur Verbindung mit einer inneren Oberfläche (10) eines Auspuffrohrs (1) vorgesehen ist,
ein zweites Ende, das einen Greifteil (11) des distalen Endes bildet, mit mindestens einem Ausschnitt am distalen Ende der Feder zum Bilden von mindestens zwei spitzen Enden, und wobei die spitzen Enden des Greifteils (11) zum Greifen in eine äußere Oberfläche (14) eines Auslassrohrs (2) vorgesehen sind,
**dadurch gekennzeichnet, dass** die Wellenform von jeder Feder umfasst:
eine erste Biegezone (15) zwischen dem Verbindungsendteil (9) und einem ersten Abwärtswellenteil (16), wobei der erste Abwärtswellenteil (16) eine zweite (17) und eine dritte (18) Biegezone umfasst, wobei die zweite Biegezone (17) einen Biegeradius von 2,5 mm bis 5,5 mm aufweist und die dritte Biegezone (18) einen Biegeradius von 2,0 mm bis 3,0 mm aufweist,
einen ersten Aufwärtswellenteil (19) mit einer vierten Biegezone (20),
einen zweiten Abwärtswellenteil (21) mit einer fünften Biegezone (22) und einer sechsten Biegezone (23),
wobei der fünfte Biegeradius mindestens 8,0 mm ist und wobei die sechste Biegezone (23) einen Biegeradius von 2,0 mm bis 3,0 mm aufweist, und
wobei dem zweiten Abwärtswellenteil (21) ein zweiter Aufwärtswellenteil (24) mit einer siebten Biegezone (25) folgt, die den zweiten Abwärtswellenteil (24) und den Greifteil (11) des distalen Endes verbindet, wobei die siebte Biegezone (25) den Greifteil (11) des distalen Endes mit einem sich aufwärts erstreckenden Federteil (26) zwischen der sechsten (23) und der siebten (25) Biegezone in einem Winkel von 35° bis 45° verbindet, und
wobei der Greifteil (11) des distalen Endes in einem Winkel von 75°-85° in Bezug auf die Längsachse der Feder abgewinkelt ist.

2. Auslassauspuffrohr-Montagesystem nach Anspruch 1, **dadurch gekennzeichnet, dass** mindestens drei, vorzugsweise mindestens vier, insbesondere fünf oder sieben Federelemente (3) an einem Ringelement (4) mit einem Außendurchmesser befestigt sind, der dem Innendurchmesser des Auspuffrohrs (1) entspricht.

3. Auslassauspuffrohr-Montagesystem nach Anspruch 1 oder 2, **dadurch gekennzeichnet, dass** das Federelement (3) einen bogenförmigen Querschnitt in einem Querschnitt senkrecht zur Längsachse des Federelements (3) gesehen aufweist, und wobei die Bogenform der oberen Oberfläche des Federelements (3) der inneren Oberfläche (10) des Auspuffrohrs (1) entspricht.

4. Auslassauspuffrohr-Montagesystem nach einem der Ansprüche 1-3, **dadurch gekennzeichnet, dass** die erste Biegezone (15) einen Biegeradius von 1,0 mm bis 2,0 mm aufweist.

5. Auslassauspuffrohr-Montagesystem nach einem der Ansprüche 1-4, **dadurch gekennzeichnet, dass** die vierte (17) und die siebte (25) Biegezone jeweils einen Biegeradius von 1,0 mm bis 4,5 mm oder vorzugs-weise 1,5 mm bis 3,5 mm aufweisen.

6. Auslassauspuffrohr-Montagesystem nach einem der Ansprüche 1-4, **dadurch gekennzeichnet, dass**
die erste Biegezone (15) in einem Winkel von 125° bis 145° gebogen ist,
die dritte Biegezone (18) in einem Winkel von 110° bis 130° gebogen ist,
die vierte Biegezone (20) in einem Winkel von 55° bis 75° gebogen ist,
und/oder
die sechste Biegezone (23) in einem Winkel von 110° bis 130° gebogen ist.

## Claims

1. Outlet exhaust pipe assembly system for assembling an exhaust pipe (1) on an outlet pipe end, wherein the assembly system comprises a resilient arrangement of at least three resilient elements (3), which can be secured to the exhaust pipe (1), wherein each resilient element (3) is bent in an undulating shape and comprises
a first end having a connection end portion (9) which is provided for connection to an inner surface (10) of an exhaust pipe (1),
a second end which forms a gripping portion (11) of the distal end, having at least one cut-out at the distal end of the spring for forming at least two acute ends, and wherein the acute ends of the gripping portion (11) are provided for gripping in an external surface (14) of an outlet pipe (2), **characterised in that** the undulating shape of each spring comprises:
a first bending zone (15) between the connection end portion (9) and a first downward shaft portion (16), wherein the first downward shaft portion (16) comprises a second bending zone (17) and a third bending zone (18), wherein the second bending zone (17) has a bending radius of from 2.5 mm to 5.5 mm and the third bending zone (18) has a bending radius of from 2.0 mm to 3.0 mm,
a first upward shaft portion (19) having a fourth bending zone (20),
a second downward shaft portion (21) having a fifth bending zone (22) and a sixth bending zone (23),
wherein the fifth bending radius is at least 8.0 mm and
wherein the sixth bending zone (23) has a bending radius of from 2.0 mm to 3.0 mm, and
wherein the second downward shaft portion (21) is followed by a second upward shaft portion (24) having a seventh bending zone (25) which connects the second downward shaft portion (24) and the gripping portion (11) of the distal end, wherein the seventh bending zone (25) connects the gripping portion (11) of the distal end to an upwardly extending resilient portion (26) between the sixth bending zone (23) and the seventh bending zone (25) at an angle of from 35° to 45°, and
wherein the gripping portion (11) of the distal end is angled away at an angle of from 75° to 85° with respect to the longitudinal axis of the spring.

2. Outlet exhaust pipe assembly system according to claim 1, **characterised in that** at least three, preferably at least four, in particular five or seven resilient elements (3), are secured to an annular element (4) with an outer diameter which corresponds to the inner diameter of the exhaust pipe (1) .

3. Outlet exhaust pipe assembly system according to claim 1 or 2, **characterised in that** the resilient element (3) has a curved cross-section when viewed in cross-section perpendicularly to the longitudinal axis of the resilient element (3), and wherein the curved shape of the upper surface of the resilient element (3) corresponds to the inner surface (10) of the exhaust pipe (1).

4. Outlet exhaust pipe assembly system according to any one of claims 1 to 3, **characterised in that** the first bending zone (15) has a bending radius of from 1.0 mm to 2.0 mm.

5. Outlet exhaust pipe assembly system according to any one of claims 1 to 4, **characterised in that** the fourth bending zone (17) and the seventh bending zone (25) each have a bending radius of from 1.0 mm to 4.5 mm or preferably from 1.5 mm to 3.5 mm.

6. Outlet exhaust pipe assembly system according to any one of claims 1 to 4, **characterised in that**
the first bending zone (15) is bent at an angle of from 125° to 145°,
the third bending zone (18) is bent at an angle of from 110° to 130°,
the fourth bending zone (20) is bent at an angle of from 55° to 75°,
and/or
the sixth bending zone (23) is bent at an angle of from 110° to 130°.

## Revendications

1. Système de montage de tuyaux d'échappement réalisé pour monter un tuyau d'échappement (1) sur une extrémité de tubulure d'échappement, ledit système de montage incluant un ensemble doué d'élasticité, composé d'au moins trois éléments élastiques (3) pouvant être fixés audit tuyau d'échappement (1), chaque élément élastique (3) étant ployé en une forme ondulée et
comprenant
une première extrémité munie d'une partie extrême de liaison (9) prévue pour instaurer la liaison avec une surface intérieure (10) d'un tuyau d'échappement (1),
une seconde extrémité matérialisant une partie de pénétration (11) de l'extrémité distale et comportant au moins une découpe, à l'extrémité distale du ressort, en vue de former au moins deux extrémités pointues, lesdites extrémités pointues de ladite partie de pénétration (11) étant prévues pour pénétrer dans une surface extérieure (14) d'une tubulure d'échappement (2),
**caractérisé par le fait que** la forme ondulée de chaque ressort comprend :
une première zone ployée (15), entre la partie extrême de liaison (9) et une première partie d'ondulation descendante (16), laquelle première partie d'ondulation descendante (16) inclut des deuxième (17) et troisième (18) zones ployées, la deuxième zone ployée (17) présentant un rayon d'inflexion de 2,5 mm à 5,5 mm, et la troisième zone ployée (18) présentant un rayon d'inflexion de 2,0 mm à 3,0 mm,
une première partie d'ondulation ascendante (19), pourvue d'une quatrième zone ployée (20),
une seconde partie d'ondulation descendante (21), dotée d'une cinquième zone ployée (22) et d'une sixième zone ployée (23),
sachant que le cinquième rayon d'inflexion est d'au moins 8,0 mm, et que ladite sixième zone ployée (23) présente un rayon d'inflexion de 2,0 mm à 3,0 mm,
sachant que ladite seconde partie d'ondulation descendante (21) est suivie d'une seconde partie d'ondulation ascendante (24) munie d'une septième zone ployée (25) qui relie ladite seconde partie d'ondulation ascendante (24) et la partie de pénétration (11) de l'extrémité distale, laquelle septième zone ployée (25) relie ladite partie de pénétration (11) de l'extrémité distale à une partie (26) du ressort qui s'étend vers le haut, entre lesdites sixième (23) et septième (25) zones ployées, suivant un angle de 35° à 45°, et
sachant que ladite partie de pénétration (11) de l'extrémité distale est recourbée suivant un angle de 75°-85° par rapport à l'axe longitudinal dudit ressort.

2. Système de montage de tuyaux d'échappement, selon la revendication 1, **caractérisé par le fait qu'**au moins trois, de préférence au moins quatre, en particulier cinq ou sept éléments élastiques (3) sont fixés à un élément annulaire (4) présentant un diamètre extérieur qui correspond au diamètre intérieur du tuyau d'échappement (1).

3. Système de montage de tuyaux d'échappement, selon la revendication 1 ou 2, **caractérisé par le fait que** l'élément élastique (3) présente une section transversale en arc de cercle, observée en coupe transversale perpendiculairement à l'axe longitudinal dudit élément élastique (3), la forme arquée de la surface supérieure dudit élément élastique (3) correspondant à la surface intérieure (10) du tuyau d'échappement (1).

4. Système de montage de tuyaux d'échappement, selon l'une des revendications 1-3, **caractérisé par le fait que** la première zone ployée (15) présente un rayon d'inflexion de 1,0 mm à 2,0 mm.

5. Système de montage de tuyaux d'échappement, selon l'une des revendications 1-4, **caractérisé par le fait que** les quatrième (20) et septième (25) zones ployées présentent, respectivement, un rayon d'inflexion de 1,0 mm à 4,5 mm ou, de préférence, de 1,5 mm à 3,5 mm.

6. Système de montage de tuyaux d'échappement, selon l'une des revendications 1-4, **caractérisé par le fait que**
la première zone ployée (15) est infléchie suivant un angle de 125° à 145°,
la troisième zone ployée (18) est infléchie suivant un angle de 110° à 130°,
la quatrième zone ployée (20) est infléchie suivant un angle de 55° à 75°, et/ou
la sixième zone ployée (23) est infléchie suivant un angle de 110° à 130°.
